# EUROPÄISCHE PATENTANMELDUNG

(11) **EP 2 609 827 A1**
(43) Veröffentlichungstag der Anmeldung: **03.07.2013**
(21) Anmeldenummer: 12450044.8
(22) Anmeldetag: 31.10.2012
(51) Int. Cl.: A45B 3/00, A45B 25/18

(54) **Sonnenschirm mit Kühleinrichtung**

(30) Priorität: 30.12.2011 AT 6872011 P
(71) Anmelder: Mag. Steiner Unternehmensberatung KG - Eurecoop, 1180 Wien (AT)
(72) Erfinder: Mag. Steiner Unternehmensberatung KG - Eurecoop, 1180 Wien (AT)

(57) **Zusammenfassung**

Doppelschirm mit einer Kühlvorrichtung, welcher einen Standmast (10) aufweist, der einen unteren Schirm (1) mit einer zentralen um den Mast liegenden Öffnung (17) und einen kleineren Schirm (2) beabstandet oberhalb des unteren trägt, wobei Speichen (15, 16) die Bespannung (4, 5) tragen. Weiters weist dieser eine entlang des Standmastes (10) bewegbare Hülse (12) auf um die Speichen (15) über eine Mehrzahl von Stegen (11, 14) zum Aufspannen und Zusammenfalten der Bespannung (4, 5) zu bewegen. Es ist eine Kühlvorrichtung in Form eines Nebelerzeugers (25) vorgesehen, die aus mehreren an den Speichen des unteren Schirmes etwa auf halber Länge angebrachten Spraydüsen (6) besteht, die mittels Schläuchen (7) entlang der jeweiligen Speiche mit einem ringförmig um den Standmast angeordneten Wasserverteiler (8) verbunden sind, der seinerseits über einen vertikal parallel zum Standmast verlaufenden Schlauch (16) mit einem Wasservorratsbehälter (9) am Fuß des Standmastes (10) verbunden ist, von dem das Wasser entweder mit einer elektrisch betriebenen Wasserpumpe (25) oder pneumatisch zu den Nebeldüsen (6) gepumpt wird.

## Beschreibung

Die vorliegende Erfindung betrifft das Gebiet der Stand-Sonnenschirme und insbesondere einen Schirm, der eine nebelerzeugende Kühlvorrichtung aufweist und diesen Nebel in den Raum unter der Bespannung des Schirms sprüht um diesen Raum zu kühlen.

Ein Stand-Sonnenschirm, beispielsweise ein Gartenschirm oder ein Strandschirm, ist oftmals mittels eines Mastes auf einer schweren Basis angebracht oder in einem zentralen Loch montiert, das sich in einer Tischoberfläche befindet. Es gibt auch die Lösung den Schirm in einer Senke im Boden zu befestigen um diesen in einer aufrechten Stellung zu halten. Solch ein Schirm weist eine Bespannung auf, die mittel radial verlaufenden Speichen geöffnet werden kann, um eine großflächige, vor der Sonneneinstrahlung schützende, Fläche zu erhalten.

Allerdings ist die Bespannung des Schirms, obwohl sie die Abschirmung des direkten Sonnenlichts erfüllt, im Fall von intensivem Sonnenlicht zusammen mit erhitzter Umgebungsluft nicht in der Lage, das heiße und drückende Gefühl einer Person zu beseitigen, die sich im Raum unter der Bespannung aufhält. Dies wird häufig bei Strandschirmen bzw. Gartenschirmen beobachtet.

Daher ist die vorliegende Erfindung darauf ausgerichtet, eine optimierte Kühlvorrichtung für einen Schirm vorzuschlagen um das heiße und drückende Gefühl einer Person, die sich unter dem Schirm aufhält, zu beseitigen. Um das zu erreichen, wird ein übereinander angeordneter Doppelschirm vorgeschlagen, wobei der untere Schirm zentriert um den Standmast eine oder mehrere Öffnungen aufweist und der darüber angeordnete kleinere, beabstandete Zweitschirm die Öffnungen des unteren Schirmes weitgehend vom Sonnenlicht abdeckt.

Solche Doppelschirme sind schon zahlreich vorgeschlagen worden und sollen in erster Linie die Windanfälligkeit solcher Schirme reduzieren [siehe z.B. CN 2226397Y(HU DAOSHENG), CN 200994495Y (ZHANG XIUCHUN), CN 201234650Y (QINGXIAO LI), US 2008135076A1 (R.M.W.AWNI)]. Obwohl bei diesen Anordnungen der Hitzepolster unter dem Schirmen reduziert wird, ist bei diesen Lösungen der Kamineffekt nachteilig, der dadurch auftritt, dass die erhitzte Luft unter der Bespannung des unteren Schirmes auf Grund der Thermik durch die Öffnung nach oben austritt und dabei weitere heiße Umgebungsluft unter den Schirm ansaugt.

Sonnenschirme mit Sprayvorrichtungen zur Kühlung der sich darunter befindlichen Personen sind ebenfalls schon bekannt: z.B. DE 202004012608U1 (M.JOEN SHEN), US 7322208B1 (A.GRIFFIN), US 2005161066A1 (M.JOEN SHEN), JP 2009074794A (SAN TECHNO KK.). Dabei wird durch kleine Düsen Nebel ausgestoßen um durch die auftretende Verdunstungskälte die Umgebungstemperatur unter der Schirmbespannung zu verringern. Es wird zwar der Hitzepolster unter dem Schirm verringert, aber kaum eine Temperatur unterhalb der Umgebungstemperatur erreicht.

Es ist hingegen keine Einrichtung bekannt, die beide Vorzüge in optimierender Weise kombiniert, damit das Ziel ein kühlendes Schirmsystem zur Verfügung zu stellen, welche das drückend heiße Gefühl einer Person vermeidet, die sich unter dem aufgespannten Schirm aufhält. Dabei soll die hier beschriebene Erfindung eine Kühlvorrichtung mit einfachem Aufbau aufweisen, die Nebel ausstößt und damit einen spürbaren Kühleffekt erreicht. Dabei soll der Kamineffekt, wie oben beschrieben, kompensiert bzw. vermieden werden. Die Sprühtröpfchen würden bei konstanter Umgebungstemperatur und Windstille durch die Schwerkraft langsam zu Boden sinken. Die durch die Öffnungen im unteren Schirm erzeugte Thermik sollte dieses Herabsinken verhindern und die Verdunstung der Tröpfchen in der Nähe der zu kühlenden Personen garantieren. Um dieses kühlere Luftvolumen möglichst lange unter dem Schirm zu erhalten wird weiters vorgeschlagen am Rande des unteren Schirmes herabhängende biegsame Bänder anzuordnen um die Konvektion der kühlenden Luftblase in die Schirmumgebung zu reduzieren. Diese Bänder können durchsichtige Kunststoffstreifen von ca. 30 cm Länge sein und eine Breite von etwa 3 cm aufweisen und etwa 10 cm voneinander entfernt am Schirmrand an ihrem einen Ende angebracht sein, damit die Sicht von unterhalb des Schirmes nicht erheblich eingeschränkt ist und auch genügend Himmelslicht unter dem Schirm gelangen kann. Vorzugsweise sollten etwa dreimal soviele Bänder wie Speichen des unteren Schirmes vorgesehen sein.

Um die oben genannten Ziele zu erreichen, wird erfindungsgemäß eine Kühlvorrichtung vorgeschlagen, die in dem Doppelschirm integriert ist. Der Schirm umfasst, wie bekannt, einen aufrechten zentralen Standmast, entlang dessen eine Hülse bewegbar ist. Der Zweitschirm ist an einem oberen Ende des Ständmastes angebracht. Eine Mehrzahl von Speichen sind gelenkig an einem Aufsatz des Mastes angebracht und erstrecken sich radial vom Aufsatz weg. Jede Speiche ist, wie üblich, mit einem Steg verbunden, der einander gegenüberliegende, gelenkig an der Hülse beziehungsweise an der Speiche angebrachte Enden aufweist. Die Bespannung ist an den Speichen angebracht und wird von diesen getragen, wodurch die Bespannung der Schirme wahlweise geöffnet bzw. geschlossen werden kann, wenn man die Hülse entlang des zentralen Pfostens nach oben bzw. unten bewegt. Die Kühldüsen sind etwa in der halben Länge ausgewählter Speichen angebracht, wobei die Wasserzuführ über Schläuche erfolgt, die an den jeweiligen Speichen befestigt sind. Richtung Schirmmitte sind die Schläuche entlang den Schirmspeichen geführt bis sie zentral am Standmast in ein ringförmiges Gehäuse für die Wasserverteilung führen. Von diesem Wasserverteiler, der etwas unterhalb des Aufsatzes der Speichengelenke am Standmast befestigt ist, führt ein etwas dickerer Schlauch vertikal zum Wasservorratsbehälter in Bodennähe oberhalb des Standfußes. Dieser Wasservorratsbehälter kann ebenfalls die Mastbasis ringförmig umschließen und auf der Schirmfußplatte aufliegen, damit die Stabilität des Schirmes erhöht wird. Der Wasserbehälter kann an seiner Oberseite eine elektrisch betriebene Wasserpumpe aufweisen bzw. kann dieser als Druckbehälter konzipiert sein, wobei das Wasser pneumatisch aus dem Behälter herausgedrückt wird. Die Wasserpumpe kann mittels Batterien bzw. Akkumulatoren oder im Falle eines Garteneinsatzes auch direkt mit Netzstrom betrieben werden. Im Falle eines pneumatischen Betriebes muss im Druckbehälter ein ausreichend großes Luftvolumen vorgesehen werden, das verdichtet werden kann. Diese Verdichtung kann ebenfalls durch eine elektrisch betriebene Luftpumpe erfolgen oder auch von Hand aus beispielsweise mittels einer Fahrradpumpe erfolgen. Letztere Lösung hat zwar den Vorteil der Unabhängigkeit der Energieversorgung aber den Nachteil eines diskontinuierlichen Betriebes. Bei mäßigem Wind wird die Kühleinrichtung nicht mehr die volle Wirksamkeit erreichen, aber das Hitzeempfinden ist durch den Wind ohnehin herabgesetzt. Jedenfalls kann der Doppelschirm auch bei stärkerem Wind noch aufgespannt bleiben, da durch die zentrale Öffnung des unteren Schirmes die Windanfälligkeit deutlich reduziert wird. Eine Regulierung des Kamineffektes, der von der Temperatur unterhalb bzw. oberhalb des unteren Schirmes abhängt, kann durch einen Lappen z.B. aus Bespannungsstoff erfolgen, der am Rand der zentralen Öffnung bzw. Öffnungen mit Klettband befestigt werden kann.

Die vorliegende Erfindung wird durch die nachfolgende Beschreibung einer bevorzugten Ausführungsform unter Bezugnahme auf die beigefügten Zeichnungen deutlich gemacht.
Fig. 1 zeigt einen vertikalen Schnitt eines Doppel-Schirmes, gemäß der vorliegenden Erfindung mit einer geeigneten Bespannung
Fig. 2 zeigt eine vergrößerte Schnittansicht des Wasservorratsbehälters an der Schirmbasis

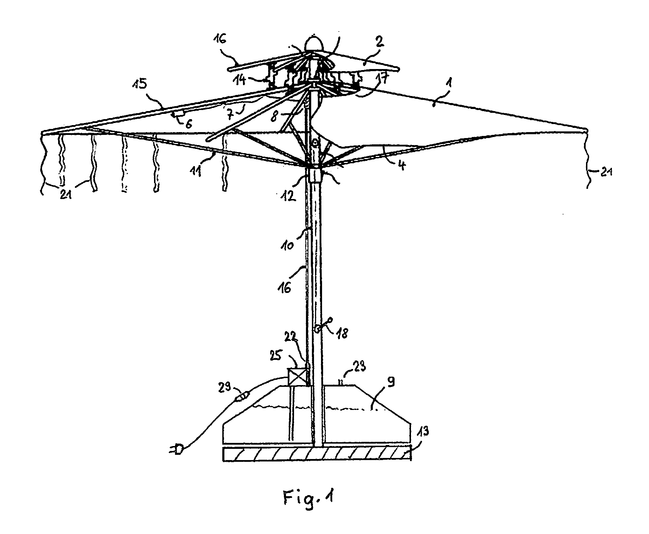

Unter Bezugnahme auf die Zeichnungen und insbesondere auf die Fig.1 umfasst ein Schirm gemäß der vorliegenden Erfindung zwei übereinander angeordnete Schirme (1, 2), deren Speichen (15. 16) mittels Drehgelenken (3) am Standmast (10) befestigt sind und eine Hülse (12), die entlang des Standmastes (10) gleitend bewegbar ist, an der gleich viele Stege (11) wie Speichen gelenkig angebracht sind. Der obere Schirm besitzt ebenfalls Stege (14), die gelenkig an den Speichen (16) befestigt sind und die ebenfalls gelenkig an der Oberseite der Speichen (15) des unteren Schirmes angebracht sind und dadurch für einen Abstand von einigen Dezimetern zwischen den Schirmen sorgen. Die Speichen (15) des unteren sowie des oberen Schirmes (16) unterstützen je eine Schirm-Bespannung (4, 5), wobei die Bespannung des unteren Schirmes zentral um den Durchstoßpunktes des Mastes (10) eine kreisförmige Öffnung (17) aufweist. Alternativ können auch mehrere längliche Öffnungen zwischen den Speichen (15) in der Bespannung (4) vorgesehen sein. Diese Lösung bewirkt eine höhere Festigkeit für die Bespannung (4) und sollte bei größeren Schirmen ins Auge gefasst werden. Die Bewegung der Hülse (12) entlang des Standmastes (10) nach oben/unten bewirkt, dass die Stege (14) die Speichen (15) des unteren Schirmes sowie über die Stege (14) die Speichen (16) des oberen Schirmes (2) nach oben/unten bewegen um dadurch die beiden Bespannungen (4, 5) zu öffnen/zu schließen. An der Unterseite der Speichen (15) des unteren Schirmes sind ca. in der halben Länge der Speichen Spraydüsen (6) mit Wasserzuführ-Schläuchen (7) befestigt, wobei die Schläuche (7) elastisch biegsam an einem ringförmig um den Standmast (10) angeordneten Wasserverteiler (8) angenippelt sind. Der Wasserverteiler (8) ist etwas unterhalb der Gelenke der Speichen des unteren Schirmes am Standmast (10) befestigt. Vom Wasserverteiler (8) hängt parallel zum Mast ein Schlauch (16) herab, der bis zum Wasservorratsbehälter (9) über der Basisplatte (13) des Doppelschirmes reicht. Das untere Ende des Standmastes (10) ist an dieser schweren Platte (13) befestigt und wird von dieser senkrecht gehalten. Das Öffnen/Schließen des Doppelschirmes kann mittels einer Öffnungs-/Schließvorrichtung (18) bewirkt werden, die am Standmast (10) angebracht ist. Die Öffnungs-/Schließvorrichtung umfasst eine Kurbel (18), die eine Rolle antreibt, um eine mit der Hülse (12) verbundene Schnur zu ziehen und zu lösen, wobei über eine Umlenkrolle im Oberbereich der Standmastes die Hülse (12) entlang des Mastes (10) zu heben bzw. zu senken ist. Eine solche Einrichtung ist allgemein bekannt und braucht daher nicht weiter im Detail beschrieben werden.

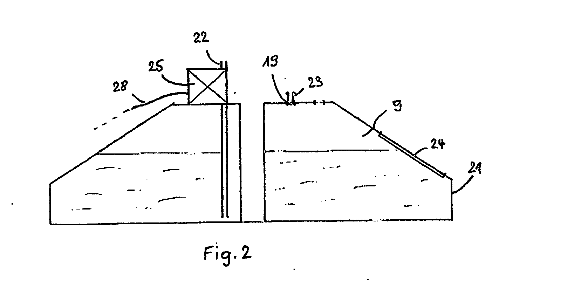

Gemäß Fig.2 umfasst der Wasservorratsbehälterbehälter (9) einen Wassereinlass (19), der wahlweise über einem Nippel (23) für einen Gartenschlauch oder mit einem Trichter von Hand aus befüllt werden kann und ggf. mit einer entfernbaren Kappe geschlossen werden kann. Der Wassereinlass (19) liegt neben einer Öffnung zum Entweichen der Luft an der höchsten Stelle des Behälters (9). Über eine Wasserniveauanzeige (24) (Fig. 2) kann außerhalb des Gehäuses (21) für eine Sichtinspektion die Restwassermenge im Wasserbehälter (9) kontrolliert werden. Ein zweiter Nippel (22) zur Befestigung des Verbindungsschlauches zum Wasserverteiler (8) befindet sich an einer elektrisch betriebenen Wasserpumpe (25) ebenfalls an der Oberseite des Wasserbehälters (9). Von dieser Einheit ragt innerhalb des Wasserbehälters ein Rohr bis fast zum Boden um nahezu die gesamte Wassermenge für die Vernebelung nutzen zu können.

Der Nebelerzeuger (25) umfasst somit eine elektrisch betriebene Pumpvorrichtung, die von einer externen Spannungsquelle mit Spannung versorgt wird. Ein Stromkabel (28) ist an dem Nebelerzeuger (25) mittels eines Schalters (29) angeschlossen und weist an dessen Ende einen Stecker zum Anschluss an eine externe Spannungsquelle auf, beispielsweise an eine Wandsteckdose oder eine Kabelrolle die ihrerseits mit einer Steckdose verbunden ist. Der Nebelerzeuger (25) pumpt das Wasser mit ausreichendem Druck über die Steigleitung (16) vom Wasserbehälter (9) zum Wasserverteiler (8), von dem das Wasser über die Schläuche (7) entlang der Speichen (15) zu den Nebeldüsen (6) gelangt, die feine Tröpfen erzeugen und versprühen. Dieser Nebel verteilt sich nach und nach im Raum unterhalb des unteren Schirmes und kühlt dieses Luftvolumen, indem er sich durch Verdunstung auflöst. Am Rand des unteren Schirmes sind, wie oben erwähnt, durchsichtige Kunststoffbänder (21) einseitig an der Schirmumrandung angebracht, die die Aufgabe haben die kühlende Luft länger im Raum unter dem unteren Schirm zu halten.

Um den Doppelschirm zu schließen, dreht der Benutzer den Kurbelarm (17) am Standmast (10) in die umgekehrte Richtung wie bei der Öffnung, wodurch sich die Hülse (12) unterhalb des Wasserverteilers (8) entlang des Standmastes (10) nach unten bewegt und damit die Bespannung (4, 5) zusammenfaltet. Diese bevorzugte Ausführungsform kann alternativ auch mit einer batterie-/akkubetriebenen Wasserpumpe ausgestattet werden, die einen vom Netzstrom unabhängigen Betrieb ermöglicht, allerdings um den Preis eines höheren Gewichtes durch die Spannungsquelle. Wie oben schon erwähnt, wäre es auch denkbar den Wasservorratsbehälter (9) als Druckgefäß auszubilden, wobei mittels einer Luftpumpe die Luft über dem Wasservorrat komprimiert wird und das Wasser über den Nippel (22) und die Steigleitung (16) ausgetrieben wird. Diese Lösung ist zwar gewichtsmäßig die Leichteste hat allerdings den Nachteil, dass sie bei wiederholten körperlichen Einsatz einer Handpumpe der Kühlung der Person unter dem Schirm entgegenwirkt.

## Patentansprüche

1. Doppelschirm mit einer Kühlvorrichtung, welcher einen Standmast (10) enthält, der einen unteren Schirm (1) mit einer zentralen um den Mast liegenden Öffnung (17) und einen kleineren Schirm (2) beabstandet oberhalb des unteren trägt, wobei Speichen (15, 16) die Bespannung (4. 5) tragen, weiters dieser eine entlang des Standmastes (10) bewegbare Hülse (12) aufweist um die Speichen (15) über eine Mehrzahl von Stegen (11, 14) zum Aufspannen und Zusammenfalten der Bespannung (4, 5) zu bewegen, **dadurch gekennzeichnet, dass,** wie an sich bekannt, eine Kühlvorrichtung in Form eines Nebelerzeugers (25) vorgesehen ist, der aus mehreren an den Speichen des unteren Schirmes etwa auf halber Länge angebrachten Spraydüsen (6) besteht, die mittels Schläuchen (7 ) entlang der jeweiligen Speiche mit einem ringförmig um den Standmast angeordneten Wasserverteiler (8) verbunden sind, der seinerseits über einen vertikal parallel zum Standmast verlaufenden Schlauch (16) mit einem Wasservorratsbehälter (9) am Fuß des Standmastes (10) verbunden ist, von dem das Wasser entweder mit einer elektrisch betriebenen Wasserpumpe (25) oder pneumatisch zu den Nebeldüsen (6) gepumpt wird.

2. Doppelschirm mit einer Kühlvorrichtung nach Anspruch 1, **dadurch gekennzeichnet, dass** an Stelle der zentralen Öffnung des unteren Schirmes mehrere längliche Öffnungen zwischen den Speichen (15) liegen können, die zentrisch-symmetrisch zum Durchstoßpunkt des Standmastes (10) angeordnet sind.

3. Doppelschirm mit einer Kühlvorrichtung nach Anspruch 1 oder 2, **dadurch gekennzeichnet, dass** am äußeren Rand des unteren Schirmes (1) mehrere, etwa dreimal soviele wie Speichen des unteren Schirmes zählende, etwa 30 cm lange und etwa 3 cm breite biegsame, durchsichtige Kunststoffbänder (21) herabhängen.

4. Doppelschirm mit einer Kühlvorrichtung nach Anspruch 1 oder 2 und 3, **dadurch gekennzeichnet, dass** kleinere, vorzüglich aus Bespannungsstoff bestehende, Textillappen mit Klettbändern in der Randregion der zentralen Öffnung (17) bzw. Öffnungen des unteren Schirmes zur Verkleinerung dieser befestigbar sind.

5. Doppelschirm mit einer Kühlvorrichtung nach Anspruch 1 oder 2, 3 und 4, **dadurch gekennzeichnet, dass** der Wasservorratsbehälter (9) am Fuße des Standmastes (10) als Druckbehälter ausgebildet ist und ein größeres Luftvolumen beinhaltet, das über eine druckdichte Verbindung mit einer Luftpumpe verdichtet werden kann.
